Europäisches Patentamt

**(19)** European Patent Office

Office européen des brevets

**(11)** **EP 1 102 035 B1**

**(12)** **EUROPÄISCHE PATENTSCHRIFT**

**(45)** Veröffentlichungstag und Bekanntmachung des Hinweises auf die Patenterteilung:
**21.12.2005 Patentblatt 2005/51**

**(51)** Int Cl.$^7$: **G01C 21/20**

**(21)** Anmeldenummer: **00124899.6**

**(22)** Anmeldetag: **15.11.2000**

**(54) Positionsinformationsübermittlungsverfahren**

Method for transmitting position information

Méthode pour transmission d'information de position

**(84)** Benannte Vertragsstaaten:
**AT BE CH CY DE DK ES FI FR GB GR IE IT LI LU MC NL PT SE TR**

**(30)** Priorität: **16.11.1999 DE 19955181**

**(43)** Veröffentlichungstag der Anmeldung:
**23.05.2001 Patentblatt 2001/21**

**(73)** Patentinhaber: **Deutsches Zentrum für Luft- und Raumfahrt e.V.**
**53175 Bonn (DE)**

**(72)** Erfinder:
• **Angermann, Michael, Dipl.-Ing.**
**82166 Gräfelfing (DE)**
• **Steingass, Alexander, Dipl.-Ing.**
**82205 Gilching (DE)**
• **Robertson, Patrick, Dr.**
**82541 Ammerland (DE)**

**(74)** Vertreter: **von Kirschbaum, Albrecht Patentanwalt,**
**Postfach 15 20**
**82102 Germering (DE)**

**(56)** Entgegenhaltungen:
**EP-A- 0 932 132        DE-A- 19 824 587**

**Beschreibung**

Die Erfindung betrifft ein Verfahren zur Übermittlung von Positionsinformationen von Navigationseinrichtungen und/oder vergleichbaren Positionsermittlungseinrichtungen an ein elektronisches Gerät, das über eine Schnittstelle Positionsdaten aufnimmt und/ oder verarbeitet.

Beispielsweise für elektronische Reiseplanungs- und -abwicklungssysteme ist die Information über die örtliche Position, in welcher sich der Reisende im Augenblick befindet, unentbehrlich. Um diese Information zu erlangen, können Navigationsempfänger, Funkbaken, Mobilfunkstationen und andere vergleichbare Positionsermittlungseinrichtungen als Hilfsmittel herangezogen werden.

Jedoch liefern alle diese Einrichtungen die Ortsinformationen auf eine unterschiedliche Art und Weise. GPS(Global Positioning System)-Navigationsempfänger beispielsweise liefern die aktuelle Position in WGS84(World Geodetic System 1984)-Koordinaten, wobei neuere derartige Empfänger noch die Zuverlässigkeit dieser Information angeben. Funkbaken beispielsweise broadcasten lediglich ihre eigene Position. Diese kann in WGS84-Koordinaten angegeben werden oder in einer anderen geeigneten Form. Innerhalb eines Raumes ändert sich diese jedoch nicht.

GSM(Global System for Mobile Communications)-Mobilfunkstationen z.B. benutzen für die Zeitsynchronisation den sogenannten "Time-Advance". Dieser mehr oder weniger genaue Wert gibt den Abstand (Halbkugelschalen-Radius) zur jeweiligen Basisstation an und kann zur Herleitung einer laufenden Ortsinformation genutzt werden.

Nach dem Stand der Technik wird die Positionsinformation über Schnittstellen verarbeitet. Beispielsweise ist eine Schnittstelle definiert, welche die Position aus GPS-Empfängern ausliest. Hierzu sind bestimmte Datenfelder definiert, in denen dann die geographische Länge (Longitude) und die geographische Breite (Latitude) oder die Geschwindigkeit abgelegt sind. Neuere GPS-Empfänger übergeben auf anderen Datenfeldern auch noch die Zuverlässigkeitsinformation.

Positionsinformationen, die von anders gearteten Navigationseinrichtungen oder Positionsermittlungseinrichtungen stammen, werden dagegen gewöhnlich in davon abweichend definierten Schnittstellenstandards geliefert. Eine GPS-Schnittstellenstruktur erlaubt es somit nicht, verschiedene Positionsermittlungseinrichtungen über die gleiche Schnittstelle mit einem elektronischen Gerät, vorzugsweise einem mobilen elektronischen Endgerät, zu verbinden.

So kann zwar beispielsweise prinzipiell eine Funkbakeninformation, die genauso wie eine GPS-Empfänger-Information in WGS84-Koordinaten vorliegt, an ein derartiges elektronisches Gerät bzw. Endgerät übermittelt werden. Eine mit einem Reiseplaner ausgerüstete Person wäre aber beim Vorbeilaufen an mehreren Funkbaken vermutlich irritiert, da ihre Position immer wieder "springt". Sie kann diese die Position betreffenden Sprünge nur als Fehlfunktion des empfangenden Endgeräts verstehen.

Darüber hinaus ist festzustellen, daß die Positionsangabe in WGS84-Koordinaten für viele andere Anwendungsfälle überhaupt nicht von Bedeutung ist. In vielen Fällen reicht es aus, wenn von den Funkbaken eine Information in Form einer Nachricht übertragen wird.

Aus DE 198 24 587 A ist ein tragbares elektronisches, kommunizierendes Navigationsgerät bekannt, das mit Software und Information versehen wird, so daß ein Benutzer reisedienliche Informationen abrufen kann. Die Information kann z.B. in Verbindung mit GPS übermittelt werden. Daten für die Information können z. B. auch über einen Sender von einem in einem Fahrzeug angebrachten Auto-Navigationssystem oder aber auch von einem Infopoint, einem Sender oder Satelliten, über das Internet oder andere Netze übernommen werden. Jedoch besteht auch hier das Problem, daß alle diese verwendbaren Einrichtungen die Ortsinformationen auf eine unterschiedliche Art und Weise liefern und somit voneinander abweichende Schnittstellenstandards erfordern.

Der Erfindung liegt die Aufgabe zu Grunde, ein Verfahren zur Übermittlung von Positionsinformationen von Navigationseinrichtungen und/oder vergleichbaren Positionsermittlungseinrichtungen an elektronische Geräte zu schaffen, das eine Schnittstellenstruktur möglich macht, die so flexibel ist, daß unterschiedliche Navigationseinrichtungen und/oder Positionsermittlungseinrichtungen über die gleiche Schnittstelle mit dem elektronischen Gerät zur Übergabe verschiedenartigster Positionsdaten ausgenutzt werden können.

Diese Aufgabe wird gemäß der Erfindung, die sich auf ein Verfahren der eingangs genannten Art bezieht, dadurch gelöst, daß von den jeweiligen Navigationseinrichtungen und/oder den vergleichbaren Positionsermittlungseinrichtungen ein Navigationsservice zur Verfügung gestellt wird, der über die Schnittstelle ein so bezeichnetes Positionsobjekt an das elektronische Gerät übermittelt, daß das Positionsobjekt aus zwei Teilen besteht, nämlich aus einem Programmteil, der einen in einer Rechnersprache abgefaßten Programmcode enthält, der bei seiner Ausführung vom elektronischen Gerät eingebunden und von ihm genutzt werden kann, und aus einem Datenteil, der vom Programmteil genutzt wird und tatsächliche Positions- und/oder Raumangaben und/oder andere Informationen enthält.

Unter Datenteil wird auch verstanden, wenn beispielsweise im Programmcode ein Zahlenwert definiert ist oder beispielsweise in der Programmiersprache "JAVA™" eine Anweisung wie

float radius = 150.0

zu finden ist. Der Datenteil des Positionsobjekts kann beispielsweise einen Kreis definieren, die Ecken eines Raumes oder Positionsangaben an einem Flughafen beinhalten.

Gemäß einer vorteilhaften Weiterbildung des erfindungsgemäßen Verfahrens wird bei Anfrage unter Ausführung des Programmcodes des Programmteils eine Wahrscheinlichkeitsverteilungsfunktion der Position erzeugt. Ferner ist die Rechnersprache des Programmcodes vorzugsweise eine portierbare Rechnersprache. Als portierbare Rechnersprache des Programmcodes kann in vorteilhafter Weise beispielsweise die Rechnersprache "JAVA™" verwendet werden.

Durch die aus zwei Teilen bestehende Übertragung ist eine viel flexiblere Übermittlung der Wahrscheinlichkeitsverteilungsfunktion möglich. Hierdurch können auch Formen übertragen werden, die bei Erstellung eines Standards nicht bekannt waren. Ebenso können alle derzeit bekannten Formen übertragen werden.

In den vorher bereits beschriebenen Beispielen waren dies eine Halbkugelschale, durch die aufgrund einer "Time Advance"-Messung für die Zeitsynchronisation der räumliche Abstand zu einer GSM-Mobilfunk-Basisstation bestimmt ist, eine Box für eine Funkbake in einem normalen Raum, eine beliebig geartete Form für eine Funkbake beispielsweise in einer Hotelhalle und eine dreidimensionale Gauß-Funktion für die Lösung eines GPS-Empfängers.

Ferner kann gemäß der Erfindung zur Übermittlung von Programm- und/oder Datenteil das JINI™- und/oder CORBA™-Protokoll verwendet werden. Auch kann gemäß der Erfindung das elektronische Gerät die Positionsdaten über ein Netzwerk empfangen und/oder weitergeben.

Der Programmteil und/oder der Datenteil können auf einem Datenträger, beispielsweise in Form einer Diskette, untergebracht werden.

Das Positionsobjekt kann über die Schnittstelle an ein mobiles Reiseassistenz-Endgerät übermittelt werden, das von einer Person oder in einem Fahrzeug mitgeführt wird, der Planung und dem Ablauf einer Reise dient und das elektronische Gerät bildet, das über die Schnittstelle Positionsdaten aufnimmt und/oder verwaltet.

Der für die Reiseplanung und -abwicklung unter Zuhilfenahme von solchen elektronischen Reiseassistenz-Endgeräten zur Schnittstellenflexibilisierung vorgesehene Navigationsservice kann somit insbesondere von die Positionsinformationen liefernden GPS-Empfängern, ortsfesten Funkbaken und Mobilfunkstationen, aber auch von anders gearteten Positionsermittlungseinrichtungen zur Verfügung gestellt werden.

Durch die Vorgehensweise entsprechend dem Verfahren nach der Erfindung können elektronische Geräte, wie beispielsweise mobile elektronische Reiseassistenz-Endgeräte, auch unter den Bedingungen einer sich schnell ändernden Welt weiterverwendet werden, ohne daß immer neue Schnittstellenstandards definiert werden müssen.

**Patentansprüche**

1. Verfahren zur Übermittlung von Positionsinformationen von Navigationseinrichtungen und/oder vergleichbaren Positionsermittlungseinrichtungen an ein elektronisches Gerät, das über eine Schnittstelle Positionsdaten aufnimmt und/oder verarbeitet **dadurch gekennzeichnet, daß** von den jeweiligen Navigationseinrichtungen und/oder den vergleichbaren Positionsermittlungseinrichtungen ein Navigationsservice zur Verfügung gestellt wird, der über die Schnittstelle ein so bezeichnetes Positionsobjekt an das elektronische Gerät übermittelt, daß das Positionsobjekt aus zwei Teilen besteht, nämlich aus einem Programmteil, der einen in einer Rechnersprache abgefaßten Programmcode enthält, der bei seiner Ausführung vom elektronischen Gerät eingebunden und von ihm genutzt werden kann, und aus einem Datenteil, der vom Programmteil genutzt wird und tatsächliche Positions- und/oder Raumangaben und/oder andere Informationen enthält.

2. Verfahren nach Anspruch 1, **dadurch gekennzeichnet, daß** bei Anfrage unter Ausführung des Programmcodes des Programmteils eine Wahrscheinlichkeitsverteilungsfunktion der Position erzeugt wird.

3. Verfahren nach Anspruch 1, **dadurch gekennzeichnet, daß** die Rechnersprache des Programmcodes eine portierbare Rechnersprache ist.

4. Verfahren nach Anspruch 3, **dadurch gekennzeichnet, daß** als portierbare Rechnersprache des Programmcodes die Rechnersprache "JAVA™" verwendet wird.

5. Verfahren nach einem der vorhergehenden Ansprüche, **dadurch gekennzeichnet, daß** der Navigationsservice von die Positionsinformationen liefernden GPS-Empfängern als Positionsermittlungseinrichtungen zur Verfügung gestellt wird.

6. Verfahren nach einem der vorhergehenden Ansprüche, **dadurch gekennzeichnet, daß** der Navigationsservice von die Positionsinformationen liefernden Funkbaken als Positionsermittlungseinrichtungen zur Verfügung gestellt wird.

7. Verfahren nach einem der Ansprüche 1 bis 6, **dadurch gekennzeichnet, daß** der Navigationsservice von Positionsinformationen liefernden Mobilfunksystemen als Positionsermittlungseinrichtungen zur Verfügung gestellt wird.

**8.** Verfahren nach Anspruch 7, **dadurch gekennzeichnet, daß** zur Herleitung der Positionsinformation der für die Zeitsynchronisation von GSM-Mobilfunkstationen genutzte sogenannte "Time Advance" verwendet wird, der zumindest einen angenäherten Wert für den Abstand zur Mobilfunk-Basisstation angibt.

**9.** Verfahren nach den Ansprüchen 1 bis 8, **dadurch gekennzeichnet, daß** zur Übermittlung von Programm- und/oder Datenteil das JINI™- und/oder CORBA™-Protokoll verwendet werden.

**10.** Verfahren nach einem der Ansprüche 1 bis 9, **dadurch gekennzeichnet, daß** das elektronische Gerät die Positionsdaten über ein Netzwerk empfängt und/oder weitergibt.

**11.** Verfahren nach Anspruch 1, **dadurch gekennzeichnet, daß** der Programmteil und der Datenteil auf einem Datenträger untergebracht werden.

**12.** Verfahren nach Anspruch 1, **dadurch gekennzeichnet, daß** das Positionsobjekt über die Schnittstelle an ein mobiles Reiseassistenz-Endgerät übermittelt wird, das von einer Person oder in einem Fahrzeug mitgeführt wird, der Planung und dem Ablauf einer Reise dient und das elektronische Gerät bildet, das über die Schnittstelle Positionsdaten aufnimmt und/oder verwaltet.

## Claims

**1.** A method for communicating positional information from navigation devices and/or comparable position detectors to an electronic device which records and/or processes position data via an interface, **characterized in that** from each navigation device and/or comparable position detector a navigation service is made available which via the interface communicates a position object to the electronic device **characterized by** the position object comprising two parts, namely a program part, containing a program code coded in the language of the computer which on being performed can be integrated by the electronic device in it making use thereof, and a data part which is used by the program part and containing actual position and/or space indications and/or other information.

**2.** The method as set forth in claim 1, **characterized in that** a probability distribution function of the position is generated when performing the program code of the program part.

**3.** The method as set forth in claim 1, **characterized in that** the computer language of the program code is preferably a portable computer language.

**4.** The method as set forth in claim 3, **characterized in that** the computer language JAVA™ is used as the portable computer language of the program code.

**5.** The method as set forth in any of the preceding claims, **characterized in that** the navigation service is made available by the GPS receivers furnishing the positional information as the position detectors.

**6.** The method as set forth in any of the preceding claims, **characterized in that** the navigation service is made available by the radio beacons furnishing the positional information as the position detectors.

**7.** The method as set forth in any of the claims 1 to 6, **characterized in that** the navigation service is made available by the mobile radio systems furnishing the positional information as the position detectors.

**8.** The method as set forth in claim 7, **characterized in that** for deriving the positional information use is made of time advance as used for time synchronizing of GPS mobile radio stations indicating at least an approximated value for the distance to the mobile radio base station.

**9.** The method as set forth in any of the claims 1 to 8, **characterized in that** for communicating the program part and/or data part the JINI™ and/or CORBA™ protocol is used.

**10.** The method as set forth in any of the claims 1 to 9, **characterized in that** the end device receives and/or relays the position data over a network.

**11.** The method as set forth in claim 1, **characterized in that** the program part and data part are saved on a data carrier.

**12.** The method as set forth in claim 1, **characterized in that** the position object is communicated via the interface to a personal or vehicular mobile travel assistance end device serving to plan and schedule a journey and forming the end device which records and/or manages the position data via the interface.

## Revendications

**1.** Procédé pour la transmission d'informations de position depuis des dispositifs de navigation et/ou des dispositifs comparables pour la détermination de position vers un appareil électronique qui reçoit et/ou traite des données de position via une interface, **caractérisé en ce que** :

- un service de navigation est mis à disposition par les dispositifs de navigation respectifs et/ou par les dispositifs comparables pour la détermination de position, lequel transmet via l'interface un objet de position ainsi désigné à l'appareil électronique ; et
- l'objet de position est constitué de deux parties, à savoir une partie de programme qui contient un code de programme rédigé dans un langage informatique, et que l'appareil électronique peut insérer lors de son exécution et aussi utiliser, et d'une partie de données qui est utilisée par la partie de programme et qui contient les indications réelles de position et/ou locales, et/ou d'autres informations.

2. Procédé selon la revendication 1, **caractérisé en ce qu'**une distribution de probabilité de la position est générée lors de l'interrogation sous l'exécution du code de programme de la partie de programme.

3. Procédé selon la revendication 1, **caractérisé en ce que** le langage informatique du code de programme est un langage informatique portable.

4. Procédé selon la revendication 3, **caractérisé en ce que** le langage informatique « JAVA™ » est utilisé comme langage informatique portable du code de programme.

5. Procédé selon l'une des revendications précédentes, **caractérisé en ce que** le service de navigation est mis à disposition par des récepteurs GPS qui livrent les informations de position, comme dispositifs de détermination de la position.

6. Procédé selon l'une des revendications précédentes, **caractérisé en ce que** le service de navigation est mis à disposition par des radiobalises qui livrent les informations de position, comme dispositifs de détermination de la position.

7. Procédé selon l'une des revendications 1 à 6, **caractérisé en ce que** le service de navigation est mis à disposition par des systèmes de téléphonie mobile qui livrent les informations de position, comme dispositifs de détermination de la position.

8. Procédé selon la revendication 7, **caractérisé en ce qu'**on utilise ce que l'on appelle le « Time Advance » servant à la synchronisation temporelle des stations de téléphonie mobile GSM pour déduire l'information de position, lequel indique au moins une valeur approximative pour la distance envers la station de base de téléphonie mobile.

9. Procédé selon l'une des revendications 1 à 8, **caractérisé en ce que** le protocole JINI™ et/ou CORBA™ est utilisé pour transmettre la partie de programmes et/ou la partie de données.

10. Procédé selon l'une des revendications 1 à 9, **caractérisé en ce que** l'appareil électronique reçoit et/ou retransmet les données de position vis un réseau.

11. Procédé selon la revendication 1, **caractérisé en ce que** la partie de programme et la partie de données sont logées sur un support de données.

12. Procédé selon la revendication 1, **caractérisé en ce que** l'objet de position est transmis via l'interface à un appareil terminal mobile d'assistance de voyage qui est transporté par une personne ou dans un véhicule, qui sert au planning et au déroulement d'un voyage et qui forme l'appareil électronique, lequel reçoit et/ou gère des données de position via l'interface.